# EUROPÄISCHE PATENTSCHRIFT

(11) **EP 1 527 851 B1**
(45) Veröffentlichungstag und Bekanntmachung des Hinweises auf die Patenterteilung: **18.02.2009**
(21) Anmeldenummer: 04025155.5
(22) Anmeldetag: 22.10.2004
(51) Int. Cl.: B25J 19/00

(54) **Handhabungsgerät, insbesondere für die Nahrungsmittel-Industrie**
Manipulator, in particular for food industry
Manipulateur, en particulier pour l'industrie alimentaire

(30) Priorität: 29.10.2003 DE 10350801
(43) Veröffentlichungstag der Anmeldung: 04.05.2005
(73) Patentinhaber: KUKA Roboter GmbH, 86165 Augsburg (DE)
(72) Erfinder: Markert, Joachim, 86163 Augsburg (DE); Merk, Günther, 86450 Altomünster (DE)
(74) Vertreter: Lenz, Steffen

(56) Entgegenhaltungen:
- WO-A-96/08347
- US-B1- 6 279 412
- "FANUC ROBOTICS LR MATE 200iB/5WP FOOD ROBOT" 23. Oktober 2003 (2003-10-23), , ROCHESTER HILLS, USA , XP002309472 Gefunden im Internet: URL:http://www.prnewswire.com/cgi-bin/stor ies.pl?ACCT=105&STORY=/www/story/10-23-200 3/0002043099> [gefunden am 2004-12-08] * das ganze Dokument *

## Beschreibung

Die Erfindung betrifft ein Handhabungsgerät, insbesondere einen Mehrachs-Industrieroboter.

In der Nahrungsmittel- und der pharmazeutischen Industrie kommen - wie in vielen anderen Bereichen der Technik - regelmäßig automatisierte Handhabungsgeräte der vorgenannten Art, wie Mehrachs-Industrieroboter, im Folgenden kurz als Roboter bezeichnet, zum Einsatz. Aufgrund der strengen herrschenden Hygienevorschriften ist dabei insbesondere darauf zu achten, dass es durch die eingesetzten Roboter zu keiner Kontamination ihrer Arbeitsumgebung kommt. Verursacher einer derartigen Kontamination sind zum einen Schmierstoff- oder Abriebpartikel, die aus dem Innern des Roboters freigesetzt werden und in die Umgebung gelangen. Andererseits kommt es in den genannten Arbeitsbereichen auch immer zu einer Verschmutzung des Roboters von außen, beispielsweise durch Nahrungsmittelreste und/oder Feuchtigkeit, was zu einer Verschmutzung und/oder Beschädigung des Roboters führen kann.

Um die vorstehend genannte Problematik zu vermeiden, wurde in der EP 0 937 551 A1 vorgeschlagen, das Grundgestell, das Karussell und die Arme eines Mehrachs-Industrieroboters mit Verkleidungen aus einem im Hinblick auf die genannten äußeren Einwirkungen unempfindlichen und leicht zu reinigenden Material, wie Edelstahl oder dergleichen, zu umgeben. Bei einer solchen Lösung ist insbesondere als nachteilig anzusehen, dass die zusätzlich vorgesehenen Verkleidungen einen konstruktiven (Material-)Mehraufwand bedeutet, was mit entsprechend erhöhten Herstellungskosten einhergeht.

Die WO 96/08347 zeigt eine Roboterarm-Anordnung, die zu Reinigungszwecken mit glattflächigen, abwaschbaren Gehäuseteilen umgeben ist. Auch hier ergeben sich die vorstehend aufgeführten Nachteile.

Weiterhin wurde in der EP 0 988 939 A1 vorgeschlagen, exponierte Oberflächen eines Industrieroboters mit einer Beschichtung aus Kunstharz oder dergleichen zu überziehen, die antimikrobielle Bestandteile aufweist. Auch hier bedingt der zusätzliche Arbeitsschritt des Beschichtens des Roboters einen nachteiligen Kostenmehraufwand bei dessen Herstellung. Des Weiteren kann die Schutzwirkung einer derartigen Beschichtung mit der Zeit und nach wiederholten Reinigungsvorgängen, beispielsweise mit Hochdruckreinigern, nachlassen. Darüber hinaus ist eine lokale Beschädigung des Schutzüberzuges möglich.

Die WO 96/08347 zeigt eine Roboterarmeinheit mit einem Teleskoparm, der aus einem Paar koäxialer rostfreier Stahlrohre bestehen kann, wobei der Arm selbst linear entlang einer nicht dargestellten, von einer Kunststoffziehharmonikaumhüllung ummantelten Schiene verfahrbar ist.

Die US 6,279,412 B1 betrifft ein System zum Schützen eines Roboterarms, mit einer muschelartigen Abdeckung aus dünnwandigem, gegen Fluide.undurchdringbarem Kunststoff, die entfernbar am Roboterarm angeordnet ist. Die Druckschrift weist darauf hin, dass schon Armteile von aus elektroplattiertem rostfreiem Stahl gefertigt wurden.

Der Erfindung liegt die Aufgabe zugrunde, ein bekanntes Handhabungsgerät, insbesondere Industrieroboter, dahingehend zu verbessern, dass in einfacher Weise eine hohe Hygiene gewährleistet ist und das Handhabungsgerät demgemäß sicher in kontaminationsgefährdeter Umgebung eingesetzt werden kann.

Erfindungsgemäß wird die genannte Aufgabe durch ein Handhabungsgerät, insbesondere einem Mehrachs-Industrieroboter, mit den Merkmalen des Anspruchs 1 gelöst.

Nachdem erfindungsgemäß die Tragstruktur des Handhabungsgerätes selbst unempfindlich gegen die vorstehend aufgeführten Umgebungseinflüsse ausgebildet ist, entfällt ein zusätzliches und kostenintensives Anbringen von Verkleidungen, Beschichtungen, Hüllen oder dergleichen zur Kontaminationsvermeidung, so dass das erfindungsgemäße Handhabungsgerät auch unter hygienisch anspruchsvollen Bedingungen, wie in der Nahrungsmittel- oder pharmazeutischen Industrie, einsetzbar ist.

Durch die Erfindung wird vermieden, dass sich bei dem erfindungsgemäßen Handhabungsgerät Schmutz, Feuchtigkeit oder dergleichen in Hohlräumen der Tragstruktur ansammeln und dort Kontaminationsherde, wie Bakteriennester oder dergleichen, bilden, indem konstruktiv bedingte Hohlräume der Tragstruktur hermetisch verschlossen sind, wie beispielsweise durch zwei oder mehrere, ein Tragteil, wie den Roboterarm oder die Schwinge, bildende Teilschalen des Handhabungsgeräts, die miteinander verschweißt oder unter Anordnung einer Dichtung gegeneinander verspannt sind. In bevorzugter Weise kann das Tragteil auch einstückig gegossen sein, wobei lediglich die Öffnung zum Entfernen des Gießkerns durch eine Abdeckung zu verschließen ist. Mit "hermetisch verschlossen" ist in jedem Fall insbesondere eine fluiddichte Abdichtung angesprochen, die sowohl ein Austreten von Kontaminationen aus dem Handhabungsgerät nach außen an die Umgebung als auch ein Eindringen von Umgebungsluft in das Handhabungsgerät zuverlässig verhindert, so dass sich dort keine Kontaminationsherde, wie Bakteriennester oder Schmutzablagerungen etc., bilden können.

Wenn die Tragstruktur konstruktiv bedingte Hohlräume mit Öffnung aufweist, sieht eine Weiterbildung des Erfindungsgegenstands vor, dass die Öffnungen unter Verwendung geeigneter statischer Dichtungen verschlossen sind. Bei relativer Beweglichkeit, wie an Drehgelenken, ist zwischen zwei Tragteilen eine dynamische bzw. drehende Dichtung in geeigneter Form angeordnet, wodurch derart das Eindringen von Schmutz vermieden wird. In bevorzugter Weise wird hier eine Doppeldichtung eingesetzt.

Weitere Vorteile und Eigenschaften der Erfindung ergeben sich aus der nachfolgenden Beschreibung eines Ausführungsbeispiels anhand der Zeichnung. Dabei zeigen:
- Fig. 1: eine Ausführungsform eines erfindungsgemäßen Handhabungsgeräts in Seitenansicht; und
- Fig. 2: einen Längsschnitt durch ein Teil der Tragstruktur des Handhabungsgeräts gemäß Fig. 1.

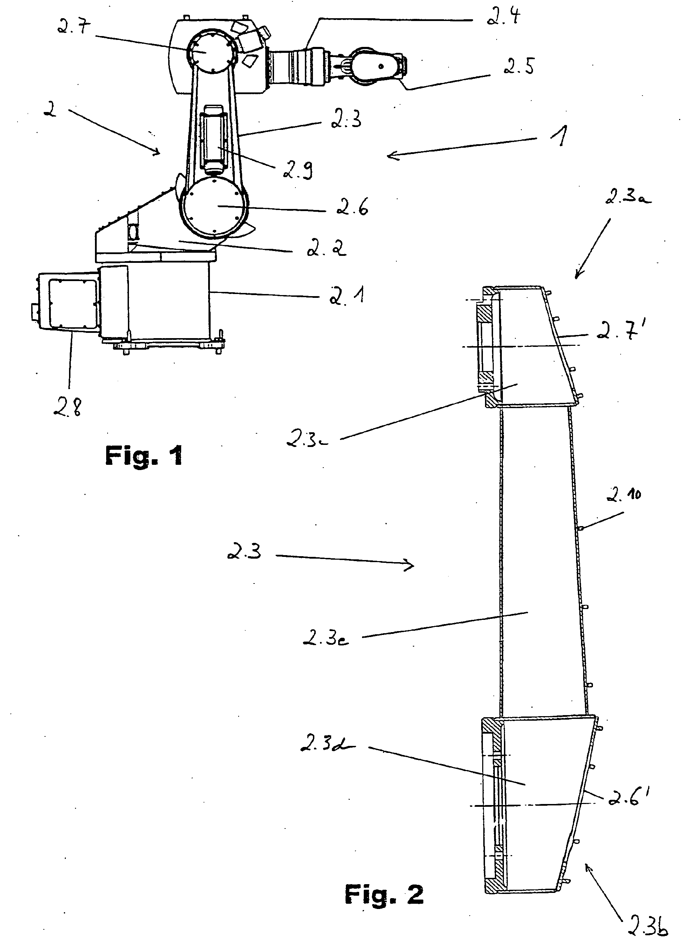

Fig. 1 zeigt eine Ausführungsform eines erfindungsgemäßen Handhabungsgeräts in Form eines Mehrachs-Industrieroboters 1, insbesondere gemäß der Norm EN ISO 8373, in Seitenansicht. Der Roboter 1 weist eine Tragstruktur 2 mit Grundgestell 2.1, Karussell 2.2, Schwinge 2.3, Arm 2.4 und Hand 2.5 auf, die erfindungsgemäß vollständig aus dem gegenüber äußeren Einflüssen, wie Feuchtigkeit oder dergleichen, inerten Material Edelstahl, gefertigt ist. Auch weitere Elemente des Roboters 1, wie Deckel 2.6, 2.7, die beispielsweise in den Gelenkbereichen zwischen Karussell 2.2 und Schwinge 2.3 bzw. Schwinge 2.3 und Arm 2.4 angeordnet sind, oder Abdeckhauben 2.8, 2.9, z.B. im Bereich des Grundgestells und/oder des Arms 2.4, sind aus Edelstahl gefertigt.

Der erfindungsgemäße Roboter 1 ist damit ohne zusätzliche Schutzmaßnahmen, wie das Anbringen von Verkleidungen oder Hüllen, in kontaminationsgefährdeten Arbeitsbereichen einsetzbar, da er sich insbesondere leicht und sicher von außen reinigen lässt und weiterhin durch Schmutz und Feuchtigkeit von außen nicht beschädigt werden kann.

Fig. 2 zeigt in einem Längsschnitt einen Teil der Tragstruktur 2 des Roboters 1 gemäß Fig. 1, nämlich die Schwinge 2.3 des Roboters 1. Die Schwinge 2.3 weist in ihrem oberen Bereich 2.3a sowie in ihrem unteren Bereich 2.3b jeweils einen konstruktionsbedingten Hohlraum in Form eines Innenraums 2.3c bzw. 2.3d mit funktionsbedingter Öffnung 2.7' bzw. 2.6' auf, um beispielsweise Gelenkbereiche des Roboters für Wartungs- und Reparaturzwecke zugänglich zu halten. Die Innenräume 2.3c und 2.3d bzw. deren Öffnungen 2.6', 2.7' sind gemäß der Fig. 1 mit Edelstahl-Deckeln 2.6, 2.7 unter Einsatz geeigneter statischer Dichtungen (hier nicht dargestellt) verschlossen. Darüber hinaus weist die Schwinge 2.3 des erfindungsgemäßen Roboters 1 gemäß der Fig. 2 einen hermetisch verschlossenen Innenraum 2.3e auf, der im Betrieb des Roboters 1 keine Funktion ausübt und deshalb erfindungsgemäß schon bei der Fertigung der Schwinge 2.3 dauerhaft dicht verschlossen wird. Auf diese Weise können sich erfindungsgemäß insbesondere in funktionell unbeachtlichen Innenräumen 2.3e der Tragstruktur 2 des Roboters 1 keine potentiell kontaminierenden Bakteriennester oder dergleichen bilden.

Die Bestandteile der Tragstruktur 2 sind weiterhin vorzugsweise derart ausgebildet, dass sich auf ihren Außenflächen keine Schmutznester bilden können und dass Flüssigkeiten ungehindert ablaufen können. Auf zusätzliche Hüllen oder Abdeckungen der Tragstruktur kann somit verzichtet werden.

Die in der Fig. 2 weiterhin dargestellten Vorsprünge 2.10 dienen zur Befestigung der Deckel 2.6, 2.7 bzw. Abdeckhauben 2.9 (Fig. 1).

### Bezugszeichenliste

- 1: Roboter
- 2: Tragstruktur
- 2.1: Grundgestell
- 2.2: Karussell
- 2.3: Schwinge
- 2.3a, 2.3b: Ende der Schwinge
- 2.3c, 2.3d, 2.3d: Innenraum
- 2.4: Arm
- 2.5: Hand
- 2.6, 2.7: Deckel
- 2.6', 2,7': Öffnung
- 2.8, 2.9: Abdeckhaube
- 2.10: Vorsprung

## Patentansprüche

1. Handhabungsgerät, insbesondere Mehrachs-Industrieroboter, mit einer als Tragstruktur bezeichneten, aus mehreren Tragteilen (2.1,2.2.,2.3,2.4,2.5) bestehenden Bauteilstruktur (2) zum Übertragen von Kräften zwischen einzelnen Gliedern des Handhabungsgerät, wobei die Tragstruktur (2) vollständig aus dem gegenüber äußeren Einflüssen, wie Feuchtigkeit oder dergleichen, inerten Material Edelstahl gebildet ist, wobei die konstruktiv bedingten Hohlräume (2.3c,2.3d,2.3e) der Tragteile hermetisch verschlossen sind, und wobei die Spalten zwischen den Tragteilen mit geeigneten Dichtungen, vorzugsweise Doppeldichtungen, abgedichtet sind.

2. Handhabungsgerät nach Anspruch 1, **dadurch gekennzeichnet, dass** die Spalten zwischen den Tragteilen durch dynamische Dichtungen abgedichtet sind.

## Claims

1. A handling device, in particular a multiaxial industrial robot, having a component structure (2), which is designated supporting structure and consists of a plurality of supporting elements (2.1, 2.2, 2.3, 2.4, 2.5), for transmitting forces between individual members of the handling device, wherein the supporting structure (2) is made completely of the material stainless steel, which is inert relative to external influences, such as moisture or the like, wherein the structurally determined cavities (2.3c, 2.3d, 2.3e) of the supporting elements are hermetically sealed, and wherein the gaps between the supporting elements are sealed with suitable seals, preferably double seals.

2. A handling device according to claim 1, **characterised in that** the gaps between the supporting elements are sealed by dynamic seals.

## Revendications

1. Manipulateur, et singulièrement robot industriel à axes multiples, avec une structure à composants (2) désignée comme structure porteuse composée de plusieurs parties porteuses (2.1,2.2,2.3,2.4,2.5) pour transmettre des forces entre différents membres du manipulateur, ladite structure porteuse (2) étant entièrement formée en acier inoxydable, matériau inerte contre les influences extérieures telle l'humidité ou autre, les cavités nécessitées par la construction (2.3c,2.3d,2.3e) des parties porteuses étant hermétiquement fermées, et les interstices entre les parties porteuses étant rendus étanches par des joints appropriés, de préférence des doubles joints.

2. Manipulateur selon la revendication 1, **caractérisé en ce que** les interstices entre les parties porteuses sont rendus étanches par des joints dynamiques.
